# EUROPEAN PATENT APPLICATION

(11) **EP 1 119 063 A1**
(43) Date of publication of application: **25.07.2001**
(21) Application number: 01101290.3
(22) Date of filing: 19.01.2001
(51) Int. Cl.: H01M 4/50, H01M 4/48, H01M 4/52

(54) **Positive active material for nonaqueous secondary battery, and nonaqueous secondary battery using the same**

(30) Priority: 20.01.2000 JP 2000012085; 12.06.2000 JP 2000175903
(71) Applicant: Japan Storage Battery Co., Ltd., Kyoto-shi, Kyoto 601-8520 (JP)
(72) Inventor: Nanamoto, Katsuya, Japan Storage Battery Co., Ltd., Kyoto-shi, Kyoto 601-8520 (JP); Murai, Tetsuya, Japan Storage Battery Co., Ltd., Kyoto-shi, Kyoto 601-8520 (JP); Hasumi, Takeshi, Japan Storage Battery Co., Ltd., Kyoto-shi, Kyoto 601-8520 (JP); Kitano, Shinya, Japan Storage Battery Co., Ltd., Kyoto-shi, Kyoto 601-8520 (JP); Mukai, Hiroshi, Japan Storage Battery Co., Ltd., Kyoto-shi, Kyoto 601-8520 (JP); Mori, Sumio, Japan Storage Battery Co., Ltd., Kyoto-shi, Kyoto 601-8520 (JP); Tagawa, Masahiro, Japan Storage Battery Co., Ltd., Kyoto-shi, Kyoto 601-8520 (JP); Kuwahara, Yoshihiro, Japan Storage Battery Co.,Ltd, Kyoto-shi, Kyoto 601-8520 (JP)
(74) Representative: Grünecker, Kinkeldey, Stockmair & Schwanhäusser Anwaltssozietät

(57) **Abstract**

The present invention can provide the nonaqueous electrolytic secondary battery excellent in cycle life characteristics and characteristics in discharge at a high rate as well as in safety in overcharge without reducing the discharge capacity by using the positive active material, which is obtained from starting materials containing Na and S by a simple production step such as water-washing treatment after synthesis to lower the impurities content and which contains less than 0.1% by weight of the sulfate group (SO₄²⁻), less than 0.024% by weight of Na and/or less than 0.13% by weight of lithium sodium sulfate (LiNaSO₄).

## Description

### FIELD OF THE INVENTION

The present invention relates to a positive active material for a nonaqueous electrolytic secondary battery, and a nonaqueous electrolytic secondary battery using the same.

### BACKGROUND OF THE INVENTION

In recent years, electronic appliances such as portable cellular phones, portable personal computers and portable video cameras have been developed, and these are downsized to a portable extent. Accordingly, high energy density, lightweight, safety and low costs have been required of cells built in these electronic appliances.

As a secondary battery to meet these requirements, a secondary battery using a nonaqueous electrolyte has been put to practical use. This cell has energy density which is several times as high as that of a secondary battery using an ordinary aqueous electrolyte. For example, there is a nonaqueous electrolytic secondary battery in which a lithium transition metal compound oxide such as a lithium cobalt compound oxide, a lithium nickel compound oxide or a lithium manganese compound oxide is used as a positive active material, an active material such as lithium metal or a lithium alloy capable of occluding and releasing lithium, for example, an Li-Al alloy or a lithium intercalation compound capable of occluding and releasing lithium ions, namely, a carbonaceous material as a negative active material, and an aprotic organic solvent containing a lithium salt such as LiClO₄ or LiPF₆ as an electrolyte respectively.

A positive electrode is obtained by holding the positive active material on a collector and forming the product into a thin sheet or foil. A negative electrode is obtained by holding the negative active material on a collector and forming the product into a thin sheet or foil.

An electricity-generating element is produced by laminating the positive electrode and the negative electrode in order such that a separator is present therebetween or by spirally winding them. When a metallic case is used, a cell is assembled by storing the electricity-generating element in a metallic container of stainless steel, nickel-plated iron or aluminum, then injecting an electrolyte into the container and sealing the container with a cover plate. When a metal-laminated resin film case is used, a cell is assembled by inserting electricity-generating element in the cylindrical laminate, sealing a lead portion, injecting an electrolyte and sealing the remaining opening portion.

Not only for the nonaqueous electrolytic secondary batteries but also appliances using cells as a power supply, lightweight and safety of the overall appliances are increasingly demanded. Accordingly, safety of cells has been required every year. Thus, it is important to improve safety of cells. Further, for producing less costly cells, it is necessary to use less costly materials. However, since less costly positive active materials contain large amounts of impurities, charge/discharge . characteristics or safety is sometimes poor. Thus, when such positive active materials can effectively be used, less costly cells can be realized.

For safety, commercially available nonaqueous electrolytic batteries have a PTC element, a CID element, a protection circuit and a current limiting mechanism in combination. However, when malfunction of these protection elements or the charge/discharge control circuit happens, cells are overcharged. In the worst case, there is a problem that thermal run away occurs, which results in breakage or firing. Thus, in view of safety of cells *per se,* they are not necessarily satisfactory.

A lithium transition metal compound oxide used in a positive active material of a nonaqueous electrolytic battery has hitherto been obtained by neutralizing a transition metal sulfate with an alkali to form a transition metal hydroxide, heating this to form a transition metal oxide, mixing the transition metal oxide with a lithium compound and heating the mixture in air at a high temperature.

Thus, when the transition metal sulfate was used as a starting material of a lithium transition metal compound oxide, sodium was incorporated as an impurity in the lithium compound. Consequently, a sulfate group (SO₄²⁻) was present in the resulting lithium transition metal compound oxide in the form of lithium sulfate, sodium sulfate or lithium sodium sulfate. When the amount of the sulfate group in the positive active material exceeds 0.1% by weight based on the total weight of the positive active material, safety in overcharge is extremely deteriorated.

That is, when the nonaqueous electrolytic secondary battery is overcharged upon exceeding a regular use range, an electrolyte is oxidatively decomposed on a positive electrode, and deposition of metallic lithium occurs on a negative electrode. Further, the reaction that occurs by overcharge includes a reaction between a negative active material in a charged state and an electrolyte, heat decomposition of an electrolyte and a reaction of a positive active material in a charged state and an electrolyte. Finally, heat decomposition of a positive active material and a negative active material occurs, resulting in breakage or firing of a cell. These reactions are all an exothermal reaction. Once the exothermal reaction occurs, it occurs successively to result in thermal run away.

In this case, when a lithium cobalt compound oxide is used as a positive active material, a sulfate group, when present as an impurity, acts as a catalyst for oxidative decomposition of an electrolyte to accelerate breakage or firing of a cell. That is, a possibility of inducing thermal run away is increased.

Moreover, the sulfate group as an impurity in the lithium cobalt compound oxide is an insulator. Accordingly, it is considered that when the sulfate group is present on surfaces of grains or in the crystal grain boundaries, conductivity of active material grains is decreased to deteriorate characteristics in discharge at a high rate. That is, characteristics of a cell might deteriorate.

In addition, as a result of X-ray diffraction analysis of impurities including this sulfate group, it was found that a main component is lithium sodium sulfate.

### SUMMARY OF THE INVENTION

Under these circumstances, the invention aims to provide a positive active material for a nonaqueous electrolytic battery having such an excellent safety that breakage or firing does not occur, even when a cell is overcharged. Further, the invention aims to obtain a nonaqueous electrolytic battery which is improved in initial charge/discharge efficiency and cycle life characteristics and excellent in characteristics in discharge at a high rate.

The positive active material for a nonaqueous electrolytic secondary battery according to the. invention has been made in view of these problems. It is a positive active material for a nonaqueous electrolytic secondary battery containing a lithium transition metal compound oxide formed in a synthesis step using plural compounds as starting materials, characterized in that an amount of a sulfate group (SO₄²⁻) contained in this positive active material is less than 0.1% by weight based on the total weight of the positive active material.

Further, the positive active material for a nonaqueous electrolytic secondary battery according to the invention is a positive active material for a nonaqueous electrolytic secondary battery containing a lithium transition metal compound oxide formed in a synthesis step using plural compounds as starting materials, characterized in that an amount of Na contained in this positive active material is less than 0,024% by weight based on the total weight of the positive active material.

Still further, the positive active material for a nonaqueous electrolytic secondary battery according to the invention is a positive active material for a nonaqueous electrolytic secondary battery containing a lithium transition metal compound oxide formed in a synthesis step using plural compounds as starting materials, characterized in that an amount of lithium sodium sulfate (LiNaSO₄) contained in this positive active material is less than 0.13% by weight based on the total weight of the positive active material.

Furthermore, the positive active material for a nonaqueous electrolytic secondary battery according to the invention is characterized by containing a lithium transition metal compound oxide formed using a compound containing a sulfate or a sulfide as at least one of starting materials.

Moreover, the positive active material for a nonaqueous electrolytic secondary battery according to the invention is characterized by containing a lithium transition metal compound oxide formed using an Na-containing compound as at least one of starting materials.

Moreover, the positive active material for a nonaqueous electrolytic secondary battery according to the invention is characterized by containing a lithium transition metal compound oxide washed with water after the synthesis step.

In addition, the positive active material for a nonaqueous electrolytic secondary battery according to the invention is characterized in that the transition metal in the lithium transition metal compound oxide is at least one selected from the group consisting of Co, Ni and Mn.

Besides, a nonaqueous electrolytic secondary battery according to the invention is characterized by using the positive active material. As a result, a nonaqueous electrolytic battery excellent in cell characteristics and safety in overcharge can be obtained.

In other words, the invention can provide the nonaqueous electrolytic secondary battery excellent in cycle life characteristics and characteristics in discharge at a high rate as well as in safety in overcharge without reducing the discharge capacity by using the positive active material which is obtained from starting materials containing Na and S by quite a simple production step such as water-washing treatment after synthesis and has a characteristic of any combination of less than 0.1% by weight of the sulfate group (SO₄²⁻) and/or less than 0.024% by weight of Na and/or less than 0.13% by weight of lithium sodium sulfate (LiNaSO₄).

### BRIEF DESCRIPTION OF THE DRAWING

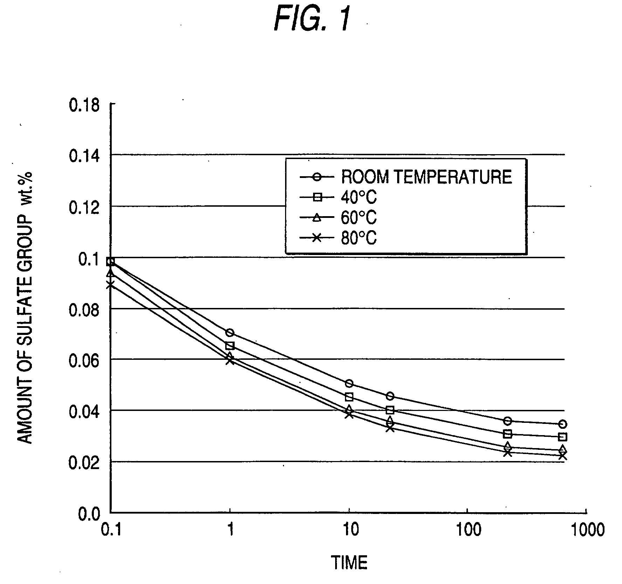

Fig. 1 is a graph showing a relation of a temperature and a time of washing with deionized water and an amount of a sulfate group after the water-washing on a lithium cobalt compound oxide.

### DETAILED DESCRIPTION OF THE INVENTION

The positive active material for the nonaqueous electrolytic secondary battery in the invention is characterized in that the amount of the sulfate group (SO₄²⁻) in the positive active material containing the lithium transition metal compound oxide is less than 0.1% by weight, and/or the amount of Na in the positive active material is less than 0.024% by weight, and/or the amount of LiNaSO₄ in the positive active material is less than 0.13% by weight based on total weight of the positive active material including these impurities. Consequently, the nonaqueous electrolytic secondary battery excellent in safety as well as in cycle life characteristics and characteristics in discharge at a high rate can be obtained.

In the invention, the lithium transition metal compound oxide is not particularly limited so long as it is a lithium transition metal compound oxide capable of occluding and releasing lithium. Preferable one is a lithium transition metal compound oxide represented by the formula LiₓM_{y}O₂ (0<x<2, 0.4< y<1.2, M is a transition metal).

The.type of the transition metal in the lithium transition metal compound oxide is not particularly limited. Examples thereof include cobalt, nickel, manganese, vanadium, chromium, iron and copper. These can be used either singly or in combination of two or more. A preferable transition metal is at least one selected from the group consisting of cobalt, nickel and manganese. The most preferable transition metal is cobalt.

The positive active material may contain an element other than the elements constituting the lithium transition metal compound oxide. Examples thereof include aluminum, boron, magnesium, calcium, strontium, potassium, hydrogen, carbon, silicon, tin, nitrogen, phosphorus, fluorine and chlorine. The amount of each of these elements contained in the positive active material is preferably 0.1 mol or less, more preferably 0.05 mol or less per mol of the transition metal. It is further preferable that the total amount of the elements other than the transition metal is 1 mol or less.

In the invention, as the sulfate group contained in the positive active material may be that of a sulfate salt. Examples of the sulfate salt include sodium sulfate, potassium sulfate, lithium sulfate, ammonium sulfate, sodium hydrogensulfate, potassium hydrogensulfate and lithium sodium sulfate. The amount of the sulfate group considered to be present in the form of such a sulfate salt is less than 0,1% by weight per 100% by weight, preferably less than 0,05% by weight of the positive active material.

In the invention, it is considered that Na contained in the positive active material is present in the form of a compound such as a sulfate, a carbonate or a hydroxide. Specific examples thereof include sodium sulfate, sodium hydrogensulfate, lithium sodium sulfate, sodium hydroxide, sodium carbonate, sodium hydrogencarbonate and sodium oxide. The amount of Na considered to be present in such a form is less than 0.024% by weight, preferably less than 0.0005% by weight based on 100% by weight of the positive active material.

With respect to impurities contained in the positive active material, it has been found that a main component is lithium sodium sulfate among the sulfate salts. The amount of this lithium sodium sulfate is preferably less than 0.13% by weight, preferably less than 0.065% by weight, per 100 parts by weight of the positive active material. The weight of lithium sodium sulfate is a weight of a dehydrated compound.

The ordinary method for producing the lithium transition metal compound oxide used a solid phase reaction by heating at a high temperature, and was completely free from a step of washing the resulting product with water. Meanwhile, in the invention, the process for producing the lithium transition metal compound oxide undergoes a step of washing the lithium transition metal compound oxide with water after synthesis. This process can provide the desired positive active material without undergoing an intricate step.

As the step of washing the positive active material with water, a general water-washing method is available. After the water-washing, spontaneous filtration by decantation or with a Buchner funnel, suction filtration or the use of a filter press or a centrifugal separator is available. Other devices or methods can also be used. Further, after the positive electrode is produced, the amount of the sulfate group in the positive active material can also be reduced by washing the positive electrode.

As water used in the water-washing treatment, any water is available. It is effective when impurity-free water is used. It is preferable to use deionized water resulting from treatment with an ion exchange resin and having conductivity of 0.2 S/cm or less.

The temperature of water is not particularly limited. Hot water considered to have high solubility of impurities is preferable. However, a boiling temperature is dangerous as a production condition, and it is thus unwanted. Therefore, in the water-washing treatment, it is preferable to use a water at temperature between 0°C to 80°C, more preferably 40°C to 80°C, most preferably 60°C to 80°C. Further, in the water-washing treatment, fine grains or a powder of the positive active material may simply be dipped in water. Stirring is preferable.

Noteworthy here is that the use of the positive active material for the nonaqueous electrolytic secondary battery with the amount of the sulfate group reduced gives excellent safety in overcharge and further improves cycle life characteristics and characteristics in discharge at a high rate. Further, in case of using less costly starting materials containing large amounts of impurities, the amounts of impurities can be reduced by the water-washing treatment. Thus, less costly positive active materials having high performance can be produced.

As a case of the nonaqueous electrolytic battery according to the invention, a metallic case or a bag-like case can be used.

As the material of the bag-like cell case, a metal-laminated resin film can be used. As the metal of the metal-laminated resin film, aluminum, an aluminum alloy or a titanium foil can be used. As a material of a sealed portion of the metal-laminated resin film, any material can be used so long as it is a thermoplastic polymeric material such as polyethylene, polypropylene or polyethylene terephthalate. The resin layer or the metal foil layer of the metal-laminated resin film is not limited to one layer. Two or more layers may also be used.

As a cell case, a metallic case such as an aluminum case, an Ni-plated iron case or a stainless steel case is available. After an electricity-generating element is stored in the cell case, it is closed with a cover plate. This cover plate may be provided with a valve which is opened according to the increase in the inner pressure of the cell.

The electrolyte solvent used in the nonaqueous electrolytic secondary battery of the invention may include polar solvents such as ethylene carbonate, propylene carbonate, dimethyl carbonate,.diethyl carbonate, γ-butyrolactone, sulfolane, dimethyl sulfoxide, acetonitrile, dimethylformamide, dimethylacetamide, 1,2-dimethoxyethane, 1,2-diethoxyethane, tetrahydrofuran, 2-methyltetrahydrofuran, dioxolane, methyl acetate and mixtures thereof.

Examples of the lithium salt dissolved in the organic solvent may include LiPF₆, LiClO₄, LiBF₄, LiAsF₆, LiCF₃CO₂, LiCF₃SO₃, LiN(SO₃CF₃)₂, LiN(SO₂CF₂CF₃)₂, LiN(COCF₃)₂, LiN(COCF₂CF₃) and mixtures thereof.

As a separator of the nonaqueous electrolytic secondary battery according to the invention, an insulating polyethylene porous film dipped in an electrolyte, a polymeric solid electrolyte and a gel-like electrolyte obtained by incorporating an electrolyte in a polymeric solid electrolyte are available. Further, a combination of an insulating porous film, a polymeric solid electrolyte and an electrolyte is also available. When a porous polymeric solid electrolyte film and an electrolyte are used in combination, the electrolyte incorporated in a polymeric substance and an electrolyte incorporated in the pores may be the same or different. As the polymeric substance, the following polymeric substances may be used either singly or in combination. The polymeric substances include polyethers such as polyethylene oxide and polypropylene oxide, polyacrylonitrile, polyvinylidene fluoride, polyvinylidene chloride, polymethyl methacrylate, polymethyl acrylate, polyvinyl alcohol, polymethacrylonitrile, polyvinyl acetate, polyvinyl pyrrolidone, polyethyleneimine, polybutadiene, polystyrene, polyisoprene and derivatives thereof. Further, copolymers obtained by copolymerizing the monomers constituting the polymeric substances may be used. In addition to the solid electrolyte, the gel-like electrolyte and the insulating porous film, insulating solid fine grains may be added. As the insulating solid fine grains, an oxide, an acid nitride and a nitride are available. Preferable are silicon oxide, aluminum oxide, iron oxide, magnesium oxide, zirconium oxide, lanthanum oxide, aluminum nitride and mixtures thereof. It is also possible that a separator having poor conductivity is interposed between the positive electrode and the negative electrode and acts to adhere the positive electrode and the negative electrode.

Examples of the compound as the material of the negative electrode may include alloys of Al, Si, Pb, Sn, Zn and Cd with lithium, transition metal oxides such as LiFe₂O₃, WO₂ and MoO₂, transition metal nitrides, carbonaceous materials such as graphite and carbon, lithium nitride such as Li₅(Li₃N), metallic lithium and mixtures thereof.

As the material of the lead terminal of the positive electrode and the negative electrode, a metal having a thickness of 10 to 150 µm can be used. Specific examples thereof include aluminum, copper, nickel, titanium, iron, an aluminum alloy, a copper alloy, a nickel alloy, a titanium alloy and stainless steel.

### EXAMPLES

The present invention will be further described in the following examples, but the present invention should not be construed as being limited thereto.

### [Example A] Effects provided by washing a positive active material with water

A process for producing a positive active material composed mainly of a lithium cobalt compound oxide is described below. Cobalt sulfate was used as a starting material. A cobalt sulfate aqueous solution was neutralized with sodium hydroxide. The precipitate was filtered, washed with water, and dried to obtain cobalt hydroxide. This cobalt hydroxide was heat-treated at 400°C to obtain tricobalt tetroxide. To the resulting tricobalt tetroxide was added lithium carbonate such that a lithium/cobalt ratio became 1.0. They were mixed well, and then calcined in air at 950°C for 24 hours. The product was crashed, classified, and pulverized to obtain a powder of a positive active material composed mainly of a lithium cobalt compound oxide.

The resulting positive active material was dipped in deionized water of a fixed temperature, stirred, and then dipped therein for a fixed period of time to adjust an amount of a sulfate group in the positive active material. Ten grams of the positive active material composed mainly of the lithium cobalt compound oxide was charged in 100 g of deionized water, and stirred. The mixture was then allowed to stand at room temperature, 40°C, 60°C or 80°C for 6 minutes, 1 hour, 10 hours, 1 day, 10 days or 30 days. Subsequently, the precipitate was filtered, and dried. Regarding the amount of the sulfate group (SO₄²⁻) in the positive active material not dipped in deionized water or in the positive active material washed in deionized water, the solution obtained by dissolving each of these substances in hydrochloric acid was analyzed through ion chromatography. The results are shown in Fig. 1. The amount of the sulfate group in the positive active material not treated with deionized water was 0.15% by weight.

Fig. 1 reveals that the positive active material composed mainly of the lithium cobalt composite oxide is dipped in deionized water for 6 minutes or more to elute the sulfate group and reduce the amount of the sulfate group to less than 0.1% by weight. It is further found that the higher the temperature of deionized water, the smaller the amount of the sulfate group.

### [Example B] Electrochemical characteristics of a water-washed positive active material

The electrochemical characteristics of the positive active material treated with deionized water of 40°C were measured using a three-terminal glass cell. An electrode was prepared by mixing 88% by weight of the positive active material powder with 7% by weight of carbon black as a conductive additive and 5% by weight of polyvinylidene fluoride (PVdF) as a binder, kneading the mixture while properly adding an N-methyl-2-pyrrolidone solution to form a slurry, coating this slurry on an aluminum mesh as a collector of a positive electrode and drying this in vacuo at 15 0°C .

This positive electrode was used as a working electrode, and a lithium metal electrode was used as a counter electrode and a reference electrode. A solution obtained by dissolving 1 mol/liter of lithium perchlorate LiClO₄ in a mixed solvent of ethylene carbonate and diethyl carbonate at a volume ratio of 1:1 was used as an electrolyte.

A charge/discharge test was conducted using this three-terminal glass cell. A charge current was 0.5 mA/cm², and the lithium metal electrode was charged to 4.3 v. Subsequently, the lithium metal electrode was discharged up to 3.0 V with a discharge current of 0.5 mA/cm² in the first cycle and with a discharge current of 4.0 mA/cm² in the second cycle. Further, in the third cycle and those following, the lithium metal electrode was charged up to 4.3 V with a charge current of 0.5 mA/cm², and then discharged up to 3.0 V with a discharge current of 1.0 mA/cm². This procedure was repeated to conduct the cycle test. The results of the charge/discharge test are shown in Table 1.

**Table 1**

| Waterwashing treatment time (hr) | Initial capacity of discharge (mAh/g) | Capacity retention (%) | Capacity of discharge at high rate (mfth/g) | Capacity of discharge after 50 cycles (mAh/g) |
|---|---|---|---|---|
| untreated | 153.5 | 89.1 | 137.0 | 133.8 |
| 0.1 | 153.7 | 89.9 | 138.2 | 134.9 |
| 1 | 153.9 | 90.5 | 138.6 | 136.4 |
| 10 | 154.2 | 91.0 | 142.9 | 138.1 |
| 24 | 155.3 | 91.7 | 145.1 | 140.7 |
| 240 | 155.4 | 91.4 | 146.2 | 141.1 |
| 720 | 155.4 | 91.0 | 145.4 | 140.4 |

Table 1 reveals that since the amount of the sulfate group of the positive active material washed with water is reduced, the initial charge/discharge.efficiency and the cycle life characteristics are improved and the characteristics in discharge at a high rate are also improved. It is considered that since the sulfate group as an impurity in the positive active material is present as an insulator on surfaces of grains and in the crystal grain boundaries, the conductivity of active material grains is decreased. When this sulfate group is removed by the water-washing treatment, the conductivity of active material grains and crystal grain boundaries and the characteristics in discharge at a high rate are improved. Further, it is also considered that a sodium-containing compound is eluted in this water-washing treatment at the same time.

### [Example C] Safety of a cell

A nonaqueous electrolytic secondary battery was produced using the positive active material of the invention, and the safety thereof was evaluated. Further, in order to identify that the same effect is provided even in different cell shapes, a cell was produced by storing an elongated circular wound-type electricity-generating element in a square cell case made of an aluminum alloy, and a cell was produced by storing the same in a metal-laminated resin film case formed by sealing a metal-laminated resin film.

First, the cell using the metal-laminated resin film case was produced.

A nonaqueous electrolytic secondary battery was produced by using the positive active material of the invention and storing an elongated circular wound-type electricity-generating element formed of a positive electrode, a separator and a negative electrode in a metal-laminated resin film case obtained by sealing a metal-laminated resin film along with a nonaqueous electrolyte.

The positive active material was dipped in deionized water at 40°C for 6 minutes, 1 hour, 10 hours, 1 day, 10 days or 30 days, and the precipitate was then filtered and dried at 130°C. Using the resulting positive active materials, cells of the invention were produced, and designated Examples 1 to 6. Further, for comparison, a cell was produced using a positive active material which was not washed with water, and this cell was designated Comparative Example 1.

A paste formed by mixing 91% by weight of a lithium cobalt compound oxide active material with 6% by weight of polyvinylidene. fluoride as a binder and 3% by weight of acetylene black as a conductive additive and adding N-methyl-2-pyrrolidone was coated on both sides of a collector made of an aluminum foil having a thickness of 20 µm, and dried at 120°C to produce a positive electrode.

A paste obtained by mixing 92% by weight of graphite as an active material with 8% by weight of polyvinylidene fluoride as a binder and adding an appropriate amount of N-methyl-2-pyrrolidone was coated on both sides of a collector made of a copper foil having a thickness of 14 µm, and dried at 115°C for 1 hour to produce a negative electrode.

A polyethylene porous film was used as a separator, and a solution obtained by dissolving 1 mol/liter of lithium perchlorate LiClO₄ in a mixed solvent of ethylene carbonate and diothyl carbonate at a volume ratio of 1:1 was used as an electrolyte.

With respect to the size of the electrode, the positive electrode had a thickness of 180 µm and a width of 49 mm, the separator had a thickness of 25 µm and a width of 53 mm, and the negative electrode had a thickness of 170 µm and a width of 51 mm. The ends of the positive electrode and the negative electrode were welded with lead terminals respectively. These were overlapped such that the lead terminal of the positive electrode and the lead terminal of the negative electrode were winding start portions. They were wound around the polyethylene rectangular core in an elongated circular spiral state such that the long side was parallel to the winding central axis of the electricity-generating element to form an electricity-generating element having a size of 53 x 35 x 4 mm.

In the insulating portion of the electrode, a tape (an adhesive was coated on one side here) for stopping the winding, which was made of polypropylene, was coated on a wall portion at the side of the electricity-generating element parallel to the winding central axis to a length corresponding to the width of the electrode (a length of the electricity-generating element parallel to the winding central axis of the electricity-generating element) to stop the winding of the electricity-generating element and fix the element.

This was accommodated in the metal-laminated resin film case such that the winding central axis of the elongated circular wound-type electricity-generating element was nearly perpendicular to an opening surface of the bag-like metal-laminated resin film case. The lead terminals were fixed, and sealed. The electrolyte was injected in vacuo in such an amount that the electrodes and the separator were satisfactorily wetted and almost no free electrolyte was present outside the electricity-generating element. A solution obtained by dissolving 1 mol/litter of lithium hexafluoride LiPF₆ in a mixed solvent of ethylene carbonate and diethyl carbonate at a volume ratio of 1:1 was used as the electrolyte.

Finally, the case was closed, and sealed to obtain a cell having a nominal capacity of 500 mAh.

Subsequently, a cell was produced using an aluminum square case.

As an elongated circular wound-type electricity-generating element and an electrolyte, those employed in the cell using the metal-laminated resin film case were used. Thus, a single cell having a nominal capacity of 500 mAh was produced.

The positive active material was dipped in deionized water at 40°C for 6 minutes, 1 hour, 10 hours, 1 day, 10 days or 30 days, and the precipitate was then filtered and dried. Using the resulting positive active materials, cells of the invention were produced, and designated Examples 7 to 12. Further, for comparison, a cell was produced using a positive active material which was not washed with water, and it was designated comparative Example 2.

With respect to each of the cells in Examples 1 to 12 and Comparative Examples 1 and 2, 20 cells were charged up to a voltage of 10 V with a charge current (500 mA; 1 CmA) at a temperature of 25°C for 1 hour to conduct a safety test in an overcharged state. The results are shown in Table 2. In Table 2, the number of cells which were broken and fired in the safety test is also shown.

**Table 2**

| Laminated cell | Number of cells broken and fired | Square cell | Number of cells broken and fired |
|---|---|---|---|
| Example 1 | 3 | Example 7 | 6 |
| Example 2 | 2 | Example 8 | 3 |
| Example 3 | 0 | Example 9 | 0 |
| Example 4 | 0 | Example 10 | 0 |
| Example 5 | 0 | Example 11 | 0 |
| Example 6 | 0 | Example 12 | 0 |
| Comparative Example 1 | 20 | Comparative Example 2 | 20 |

As is apparent from Table 2, the cells in Comparative Examples 1 and 2 were in such a dangerous state that all of them were broken and fired. Meanwhile, in the cells in Examples 1 to 12, the number of cells broken and fired was much reduced. Especially, none of the cells in Examples 3 to 6 and 9 to 12 in which the positive active material was washed with deionized water at 40°C for 10 hours or more were broken and fired. Thus, the very safe cells were obtained.

These results indicated that the safety of the nonaqueous electrolytic battery in overcharge could markedly be improved by using the positive active material in which the amount of the sulfate group was reduced to 0.1% by weight or less by the water-washing treatment.

In the foregoing Examples, the positive active material composed mainly of the lithium cobalt compound oxide was described. However, it goes without saying that the water-washing treatment of the invention is also effective for other lithium transition metal compound oxides.

The details of this function are unclear at the present moment. It is considered that when the positive active material of the invention is used, the sulfate group as an impurity that can act as a catalyst in oxidative decomposition of an electrolyte is removed to control the oxidative decomposition of the electrolyte in overcharge.

That is, in the nonaqueous electrolytic secondary battery of the invention, the oxidative decomposition of the electrolyte in the initial stage of overcharge can be controlled to reduce the heat generation and less increase the inner temperature of the cell and control the subsequent reaction of the positive electrode with the electrolyte and the decomposition product. As a result, it is considered that the whole amount of heat generated is decreased, and that finally the cell temperature is not increased up to a decomposition temperature of the positive active material and the negative active material at which to cause breakage and firing of the cell and the safety can be attained. Besides, it is also considered that since the surfaces of the grains are modified by washing the positive active material with water, the safety is attained. However, the details are unclear. [Example D] Lithium sodium sulfate

One kilogram of the positive active material composed mainly of the lithium cobalt compound oxide and formed by the foregoing method was mixed with 10 kg of deionized water for 10 minutes, and the solution was then filtered to separate the aqueous solution and the powder of the positive active material. The aqueous solution and the positive active material were dried well at 130°C to obtain an impurity as a white powder by removal of water from the aqueous solution and the powder of the positive active material by removal of the water-soluble component from the lithium cobalt compound oxide. The weight of the impurity separated when the water-washing treatment was conducted once and the weight of the impurity separated when the water-washing treatment was repeated seven times are shown in Table 3.

**Table 3**

| Waterwashing treatment | first | second | third | fourth | fifth | sixth | seventh |
|---|---|---|---|---|---|---|---|
| Weight of impurity | 4.8 g | - | - | - | - | - | - |
| Weight of impurity | 4.8 g | 1.2 g | 0.5 g | 0.2 g | 0.1 g | 0.0 g | 0.0 g |

From Table 3, it is found that the impurity can mostly be separated by conducting the water-washing treatment only once and when the water-washing treatment is repeated seven times, the impurity soluble in deionized water can be removed from the positive active material almost completely. Further, as a result of X-ray diffraction analysis of the thus-separated impurity, it was found that a main component was lithium sodium sulfate (LiNaSO₄).

With respect to the amount of Na in the positive active material not washed with water and that in the positive active material washed with water, solutions obtained by dissolving these positive active materials in hydrochloric acid were analyzed through ion chromatography. Consequently, it became apparent that the positive active material not washed with water contained 0.05% by weight of Na and the positive active material washed with water once contained 0,023% by weight of Na.

Cells were produced in the foregoing manner using the positive active material washed with water once and the positive active material washed with water seven times. The overcharge test was conducted such that the cells were charged for 3 hours with constant currents of 300 mA, 500 mA and 700 mA with the upper limit of the voltage being 10 V. The results are shown in Table 4. The temperature of the cells was 25°C.

**Table 4**

| | 300 mA | 500 mA | 700 mA |
|---|---|---|---|
| Example 13 (water-washing once) | Nothing occurs. | Nothing occurs. | Fuming |
| Example 14 (water-washing seven times) | Nothing occurs. | Nothing occurs, | Nothing occurs. |
| Comparative Example 3 (no water-washing) | Nothing occurs. | Fuming | Fuming |

As is apparent from Table 4, the cell in Comparative Example 3 which was not washed with water caused the fuming when the charge current was 500 mA or more, whereas the cell in Example 13 which was washed with water once caused the fuming when the charge current was 700 mA, but nothing abnormal occurred when the charge current was 500 mA or less. Further, in the cell in Example 14 washed with water seven times, nothing abnormal occurred in either case. Thus, it was found that quite a safe cell was provided.

From the foregoing results, it was found that the nonaqueous electrolytic battery using the positive active material containing less than 0.024% by weight of Na improved the safety in overcharge. It is unclear in what form Na is present in the positive active material and what influence is exerted on the safety of the cell by the water-washing treatment. It is presumed that Na is present in the form of LiNaSO₄ detected as an impurity. From this, the amount of LiNaSO₄ which seems likely to be present in the positive active material washed with water once is less than 0.13% by weight.

In the foregoing Examples, the lithium cobalt compound oxide was described as the lithium transition metal compound oxide. It goes without saying that the water-washing treatment of the invention is also effective for other lithium transition metal oxides.

The present invention can provide the nonaqueous electrolytic secondary battery excellent in cycle life characteristics and characteristics in discharge at a high rate as well as in safety in overcharge without reducing the discharge capacity by using the positive active material which is obtained from starting materials containing Na and S by quite a simple production step such as water-washing treatment after synthesis and has a characteristic of any combination of less than 0.1% by weight of the sulfate group (SO₄²⁻) and/or less than 0.024% by weight of Na and/or less than 0.13% by weight of lithium sodium sulfate (LiNaSO₄).

While the invention has been described in detail and with reference to specific embodiments thereof, it will be apparent to one skilled in the art that various changes and modifications can be made therein without departing from the spirit and scope thereof.

This application is based on Japanese patent applications No. Hei. 2000-012085 filed on January 20, 2000 and No. Hei. 2000-175903 filed on June 12, 2000, the entire contents of each thereof are incorporated hereinto by reference.

## Claims

1. A positive active material for a nonaqueous electrolytic secondary battery comprising a lithium transition metal compound oxide formed in a synthesis step using plural compounds as starting materials, wherein an amount of a sulfate group (SO₄²⁻) contained in this positive active material is less than 0.1% by weight based on the total weight of the positive active material.

2. The positive active material for a nonaqueous electrolytic secondary battery as claimed in claim 1, which comprises a lithium transition metal compound oxide formed using a compound containing a sulfate.or a sulfide as at least one of starting materials.

3. The positive active material for a nonaqueous electrolytic secondary battery as claimed in claim 1, which comprises a lithium transition metal compound oxide washed with water after the synthesis step.

4. The positive active material for a nonaqueous electrolytic secondary battery as claimed in claim 1, wherein the transition metal in the lithium transition metal compound oxide is at least one member selected from the group consisting of Co, Ni and Mn.

5. A nonaqueous electrolytic secondary battery comprising the positive active material as claimed in claim 1.

6. A positive active material for a nonaqueous electrolytic secondary battery comprising a lithium transition metal compound oxide formed in a synthesis step using plural compounds as starting materials, wherein an amount of Na contained in said positive active material is less than 0.024% by weight based on the total weight of the positive active material.

7. The positive active material for a nonaqueous electrolytic secondary battery as claimed in claim 6, which comprises a lithium transition metal compound oxide formed using an Na-containing compound as at least one of starting materials.

8. The positive active material for a nonaqueous electrolytic secondary battery as claimed in claim 6, which comprises a lithium transition metal compound oxide washed with water after the synthesis step.

9. The positive active material for a nonaqueous electrolytic secondary battery as claimed in claim 6, wherein the transition metal in the lithium transition metal compound oxide is at least one member selected from the group consisting of Co, Ni and Mn.

10. A nonaqueous electrolytic secondary battery comprising the positive active material as claimed in claim 6.

11. A positive active material for a nonaqueous electrolytic secondary battery containing a lithium transition metal compound oxide formed in a synthesis step using plural compounds as starting materials, wherein an amount of a lithium sodium sulfate (LiNaSO₄) contained in said positive active material is less than 0.13% by weight based on the total weight of the positive active material.

12. The positive active material for a nonaqueous electrolytic secondary battery as claimed in claim 11, which comprises a lithium transition metal compound oxide formed using a compound containing a sulfate or a sulfide as at least one of starting materials.

13. The positive active material for a nonaqueous electrolytic secondary battery as claimed in claim 11, which comprises a lithium transition metal compound oxide washed with water after the synthesis step.

14. The positive active material for a nonaqueous electrolytic secondary battery as claimed in claim 11, wherein the transition metal in the lithium transition metal compound oxide is at least one member selected from the group consisting of Co, Ni and Mn.

15. A nonaqueous electrolytic secondary battery comprising the positive active material as claimed in claim 11.

16. A method for removing impurity from a positive active material of non-aqueous secondary battery, which comprising the step of washing a lithium transition metal compound oxide with water after the synthesis step thereof.

17. The method of claim 16, wherein said impurity is at least one selected from the group consisting of SO₄²⁻, Na and LiNaSO₄.
